# EUROPEAN PATENT SPECIFICATION

(11) **EP 2 664 157 B1**
(45) Date of publication and mention of the grant of the patent: **04.05.2016**
(21) Application number: 12700639.3
(22) Date of filing: 10.01.2012
(51) Int. Cl.: H04N 21/438, H04N 21/2343, H04N 21/643, H04N 21/6405

(54) **FAST CHANNEL SWITCHING**
SCHNELLE KANALUMSCHALTUNG
COMMUTATION DE CANAL RAPIDE

(30) Priority: 11.01.2011 GB 201100397
(43) Date of publication of application: 20.11.2013
(73) Proprietor: Universiteit Gent, 9000 Gent (BE); ALCATEL LUCENT, 92100 Boulogne-Billancourt (FR)
(72) Inventor: VAN WALLENDAEL, Glenn, 9000 Gent (BE); MACQ, Jean-François, 1083 Ganshoren (BE); VAN LANCKER, Wim, 9940 Sleidinge (BE); LAMBERT, Peter, 8755 Ruiselede (BE); VAN DE WALLE, Rik, 9880 Aalter (BE)
(74) Representative: Wauters, Davy Erik Angelo
(86) International application number: PCT/EP2012/050316
(87) International publication number: WO 2012/095427

(56) References cited:
- WO-A1-2010/008416
- WO-A2-2006/057938
- DVB ORGANIZATION: "IPI2847r2_Companion Stream FCC Draft Text.doc", DVB, DIGITAL VIDEO BROADCASTING, C/O EBU - 17A ANCIENNE ROUTE - CH-1218 GRAND SACONNEX, GENEVA - SWITZERLAND, 5 July 2010 (2010-07-05), XP017832736,
- SCHWARZ H ET AL: "SVC overview", 21. JVT MEETING; 78. MPEG MEETING; 20-10-2006 - 27-10-2006; HANGZHOU,CN; (JOINT VIDEO TEAM OF ISO/IEC JTC1/SC29/WG11 AND ITU-T SG.16 ),, no. JVT-U145, 20 October 2006 (2006-10-20) , XP030006791, ISSN: 0000-0405

## Description

### Field of the invention

The present invention relates to the field of digital television, and more particularly to the field of zapping (channel switching or channel surfing) in digital television.

### Background of the invention

Ever since remote controls for television sets exist, these have been used for scanning from channel to channel in order to see which programs are broadcast on the various channels. With analog television signals, switching channels is obtained by tuning a tuner to a new channel. This channel switching is substantially instantaneous. However, the coding structure of the digital video streams that are transmitted within digital TV systems (e.g., IPTV - Internet Protocol Television) is complicated, and once the tuner is tuned to the new channel, various operations must be performed before the television signal is viewable on the display, for example decoding of the received video stream and reconstruction of the sequence of images to be displayed. As the decoding processing of some images requires previously decoded images, and as these previously decoded images are not available upon channel switching, new images cannot instantaneously be shown, leading to channel switching times of 1 second or more, which creates user frustration and hampers quickly scanning viewable channels.

A digital video comprises a sequence of pictures. The change from one picture to the next picture is predicted and only the prediction error (difference between the two pictures) is encoded and transmitted. To allow random access, this prediction chain is subdivided into regular intervals to which so-called key pictures (or key frames) are inserted. Said key pictures are pictures that are not based on predicted information so that they can be decoded independently from other (preceding) pictures.

As a consequence, a set-top-box tuning into a TV channel has to wait for the next key picture. A typical key picture time interval in DVB (digital video broadcasting) amounts to about 2 seconds, which means that an average time for the set-top-box to wait for the next key picture is about 1 second. To reduce this waiting time, key pictures may be inserted at shorter intervals. However, as each key picture needs to contain the whole information of the picture, rather than only differences with respect to previous pictures, introducing more key pictures comes at the cost of coding efficiency: a higher bit rate is needed in exchange for faster switching.

This problem has been solved by using companion channels: every channel is combined with a low quality version thereof that can offer high zapping speeds, both the channel and the low quality version thereof being multicast. In case of a channel switch, a low quality version of the new channel is shown until a switching point of the high quality version of the new channel is reached. This requires a higher bitrate, because two versions of the same bit stream need to be broadcast.
The use of companion channels is explained in: 'DVB organization: "IPI2847r2_Companion Stream FCC Draft Text.doc", DVB, DIGITAL VIDEO BROADCASTING, C/O EBU - 17 A ANCIENNE ROUTE - CH-1218 GRAND SACONNEX, GENEVA - SWITZERLAND, 5 July 2010 (2010-07-15), XPO17832736'. The Fast Channel Change (FCC) method described therein uses a "tune-in" companion service sent along with the original service. The tune-in companion service helps the receiver during the channel change process to retrieve an display the new service more rapidly.

WO2010/008416 describes an apparatus encoding a video signal for providing a scalable video coded (SVC) signal comprising a base layer video coded signal and an enhancement layer video coded signal, wherein the base layer video coded signal has more random access points, e.g., Instantaneous Decoder Refresh (IDR) slices, than the enhancement layer and in those access units where the enhancement layer has an IDR slice, the base layer has a non-IDR slice.

WO2006057938 describes a set top box and corresponding methods for enabling a channel change in a Digital Subscriber Line (DSL) system. The set top box includes a channel change processing unit for sending a join request for both a normal stream and channel change stream upon receiving a channel change request.

### Summary of the invention

It is an object of embodiments of the present invention to provide a method and device for providing allowable zapping speeds in digital television systems. It is an advantage of embodiments of the present invention that a fast zapping speed between video streams can be obtained while bandwidth requirements are still acceptable. In particular embodiments of the present invention there may even be a bit rate gain compared to traditional solutions.

The above objective is accomplished by a method and device according to the present invention.

In a first aspect, the present invention provides a method for switching from a first data channel to a second data channel of a digital television system. At least the second data channel is coded in a multilayer scalable video coding format comprising a base layer and at least one enhancement layer. The method comprises taking into account information from the enhancement layer comprising more random access points than the base layer thus being adapted for providing fast switching when performing the switching. Hence in accordance with embodiments of the present invention multilayer coding is used for switching between channels, where in prior art digital version thereof being multicast. In case of a channel switch, a low quality version of the new channel is shown until a switching point of the high quality version of the new channel is reached. This requires a higher bitrate, because two versions of the same bit stream need to be broadcast.

The use of companion channels is explained in: 'DVB organization: "IPI2847r2 Companion Stream FCC Draft Text.doc", DVB, DIGITAL VIDEO BROADCASTING, C/O EBU - 17 A ANCIENNE ROUTE-CH-1218 GRAND SACONNEX, GENEVA - SWITZERLAND, 5 July 2010 (2010-07-15), XPO17832736'. The Fast Channel Change (FCC) method described therein uses a "tune-in" companion service sent along with the original service. The tune-in companion service helps the receiver during the channel change recess to retrieve an display the new service more rapidly.

WO2010/008416 describes an apparatus encoding a video signal for providing a scalable video coded (SVC) signal comprising a base layer video coded signal and an enhancement layer video coded signal, wherein the base layer video coded signal has more random access points, e.g., Instantaneous Decoder Refresh (IDR) slices, than the enhancement layer and in those access units where the enhancement layer has an IDR slice, the base layer has a non-IDR slice. WO2010/008416 also discloses that fast channel switching may be performed by using an IDR slice in the enhancement layer and thereafter switching to the base layer, if an IDR slice in the enhancement layer is more early available than an IDR slice in the base layer.

WO2006057938 describes a set top box and corresponding methods for enabling a channel change in a Digital Subscriber Line (DSL) system. The set top box includes a channel change processing unit for sending a join request for both a normal stream and channel change stream upon receiving a channel change request.

### Summary of the invention

It is an object of embodiments of the present invention to provide a method and device for providing allowable zapping speeds in digital television systems. It is an advantage of embodiments of the present invention that a fast zapping speed between video streams can be obtained while bandwidth requirements are still acceptable. In particular embodiments of the present invention there may even be a bit rate gain compared to traditional solutions.

The above objective is accomplished by a method and device according to the present invention.

In a first aspect, the present invention provides a method for switching from a first data channel to a second data channel of a digital television system. At least the second data channel is coded in a multilayer scalable video coding format comprising a base layer and at least one enhancement layer. The method comprises taking into account information from the enhancement layer comprising more random access points than the base layer thus being adapted for providing fast switching when performing the switching. Hence in accordance with embodiments of the present invention multilayer coding is used for switching between channels, where in prior art digital television systems multilayer coding is used for heterogeneous clients and/or requirements. In accordance with embodiments of the present invention, an enhancement layer may be adapted for providing fast switching by providing it with more random access points, e.g. more IDR-frames. Such provision of more random access points allows faster switching, as it takes less time for the system to wait for a next random access point. In particular embodiments, the at least one enhancement layer adapted for providing fast switching is provided with more random access points that the base layer.

In a method according to embodiments of the present invention, taking into account information from an enhancement layer adapted for providing fast switching may comprise switching to the enhancement layer adapted for providing fast switching of the second data channel at a random access point e.g. an IDR-frame thereof. This may take place at a moment in time before a random access point in the base layer is encountered.

A method according to embodiments of the present invention may furthermore comprise, after switching to the enhancement layer adapted for providing fast switching of the second data channel, switching to the base layer of the second data channel at a random access point, e.g. an IDR-frame, thereof. This way, the enhancement layer data stream is shown only a short period of time, after which a switch towards the base layer data is made. The quality of the enhancement layer data may be lower than the quality of the base layer data. As the data of the enhancement layer is only visualized a short period in time, just before the switch towards visualization of the base layer data, visualization of this low quality data will not be detrimental to a user's experience.

After the switch towards the base layer, the information of the enhancement layer adapted for fast switching is not required for the digital television system anymore. Hence a method according to embodiments of the present invention may furthermore include after switching to the base layer of the second data signal, retaining from transmission of the enhancement layer of this second data signal. This provides a gain in bandwidth.

In a second aspect, the present invention provides a fast channel switching scalable coding format comprising a multilayer structure with a base layer and at least one enhancement layer, wherein at least one of the at least one enhancement layers is adapted for fast switching by providing more random access points, e.g. IDR-frames, than in the base layer. It is generally known that providing more random access points, e.g. IDR-frames, reduces the switching delay, but increases the required bandwidth. It is advantageous to provide the supplementary random access points in an enhancement layer adapted for fast switching, which needs only be used, hence transmitted, when switching from one channel to another.

In a fast channel switching scalable coding format according to embodiments of the present invention, the base layer may encode images at higher quality than the enhancement layer adapted for fast switching. Embodiments of the present invention provide higher coding efficiency. As the enhancement layer is visualized only a short period of time after switching, the quality may be lower without destroying the user's experience. Typically in the prior art, lower quality streams are encoded in enhancement layers.

A fast channel switching scalable coding format according to embodiments of the present invention may furthermore comprise other enhancement layers not specifically adapted for fast switching. Such enhancement layers may for example be prior art enhancement layers such as enhancement layers coding a same image stream but at different quality levels or resolution levels, for heterogeneous environments.

A fast channel switching scalable coding format according to embodiments of the present invention may comprise a plurality of enhancement layers adapted for fast switching. As an example one enhancement layer for fast switching may be provided for each or for some of the other 'normal' enhancement layers not specifically adapted for fast switching but for heterogeneous environments.

In a further aspect, the present invention provides a codec for coding or decoding a data channel, the codec being adapted for coding or decoding the data channel in a multilayer format comprising a base layer and at least one enhancement layer. In embodiments of the present invention, the enhancement layer is provided with data features for fast switching of the data channel. This way, in accordance with embodiments of the present invention, multilayer coding is used for switching between channels.

In a codec according to embodiments of the present invention, the base layer comprises a video stream with a limited number of random access points, e.g. IDR-frames, and the enhancement layer comprises the video stream with more random access points, e.g. IDR-frames. This allows faster switching to the enhancement layer.

A codec according to embodiments of the present invention may be adapted for coding or decoding the data channel such that the video stream of the base layer is a high quality video stream and the video stream of the enhancement layer is a low quality video stream. This leads to increased coding efficiency. The bandwidth required for coding/decoding the video stream in the enhancement layer would be higher due to the presence of an increased number of random access points, but in the end is not higher due to the lower quality.

In a further aspect, the present invention provides a digital television system comprising a codec according to embodiments of the present invention.

In yet a further aspect, the present invention provides a digital video data signal, encoded in a multilayer stream comprising a basic layer and at least one enhancement layer. At least one of the at least one enhancement layers comprises picture information for a same image stream as the basic layer, but with more random access points, e.g. IDR-frames. This allows faster channel switching when using the digital video data signal e.g. in a television system.

In a digital video data signal according to embodiments of the present invention, the one of the at least one enhancement layers comprising picture information for a same image stream as the basic layer but with more random access points comprises picture information for the same image stream as the basic layer but with lower quality. This helps the required bandwidth not to increase significantly.

In a further aspect, the present invention provides the use of an enhancement layer of a multilayer-coded digital video signal in channel selection in a digital television system. In particular embodiments, the enhancement layer may be adapted for fast switching. Hereto, the enhancement layer may be provided with more random access points, e.g. IDR-frames, than the base layer.

In accordance with embodiments of the present invention, the enhancement layer may be coded at lower quality than the base layer.

In yet another aspect, the present invention provides a method of digital encoding of a digital video stream, the method comprising coding the video stream in a base layer of a multilayer coding format with a random access point period, e.g. IDR-period, and coding the video stream in an enhancement layer of the multilayer coding format with a lower random access point period, e.g. IDR-period.

In embodiments of the present invention, the method may comprise coding the video stream in the base layer of the multilayer coding format at a first, high quality, and coding the video stream in the enhancement layer of the multilayer coding format with a second, lower quality.

In yet another aspect, the present invention provides a computer program product comprising executable machine readable computer code for executing any of the methods according to the first aspect of the present invention when executed on a computing device associated with a digital television system. Such computer program product can be tangibly embodied in a carrier medium carrying machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non volatile media include, for example, optical or magnetic disks, such as a storage device which is part of mass storage. Common forms of computer readable media include, a CD-ROM, a DVD, a flexible disk or floppy disk, a memory key, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

The fast switching technique according to embodiments of the present invention makes use of a specific configuration of video streams, in particular multilayer video streams such as for example SVC video streams, to accelerate the TV channel switching speed.

In particular embodiments of the present invention, to speed up the channel switching speed of an H.264/AVC video stream, an SVC enhancement layer with the fast switching property is added. As a result, the base layer contains a slow switching video stream and by the addition of extra information for the enhancement layer, a fast switching video stream is obtained.

The entire multilayer video stream according to embodiments of the present invention can now be multicast to users in the same way it happens with a regular H.264/AVC video stream. When a user changes from channel, the fast channel switching enhancement layer is used for decoding the multilayer, e.g. SVC, video stream (base layer + enhancement layer adapted for fast switching + optionally other enhancement layers). When a random access frame is found in the base layer, only the base layer is used.

A method according to embodiments of the present invention can be further optimized for example by removing the fast switching enhancement layer when the user is not switching between channels. This can be done by an intermediate node like a residential gateway or an access multiplexer (e.g. a DSLAM, CMTS, DLC or ONU). On reception of a join request to the multicast group, the intermediate node sends both the base layer and the enhancement layer. As soon as the first random access frame in the base layer is found, only the base layer is sent.

Alternatively, by putting each layer (base layer and enhancement layer) in a separate multicast, for example the end user set-top-box can decide/manage which layers are sent over the access network. IN this case, no adaptations to the network infrastructure are required.

Embodiments of the present invention have been proven to be effective for example for SVC compared to H.264/AVC, but the present invention is not limited thereto and may also be applied to other scalable coding formats.

With embodiments of the present invention, zapping speeds become higher while at the same time decreasing the bit rate.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

### Brief description of the drawings

FIG. 1 is a schematic illustration of different types of slices used in a scalable coding format.
FIG. 2 illustrates a video stream according to its decoding sequence.
FIG. 3 illustrates a multilayer coding structure according an embodiment of the present invention, comprising a base layer containing a full video stream, and an enhancement layer comprising low quality video information but encoded with supplementary I-frames.
FIG.4 illustrates a coding structure according to an embodiment of the present invention when switching from one channel to another.
FIG. 5 illustrates a coding structure according to an embodiment of the present invention, comprising two enhancement layers, when switching from one channel to another.
FIG. 6 is overview of an IPTV network.
FIG.7, FIG.8, FIG. 9 and FIG. 10 illustrate applications where a method, a coding format and/or devices according to embodiments of the present invention are used.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

Video coding is highly standardized; e.g. the H.264/AVC (H.264/Advanced Video Coding) is often used. This coding standard reaches a compression factor which is much higher than compression factors reached with other compression standards such as e.g. MPEG-2 or DivX. Hence a reduction of the required bandwidth may be obtained. Embodiments of the present invention will be described in detail with reference to the H.264/AVC and SVC standard, but this is not intended to be limiting for the present invention, which is applicable to any suitable type of multilayer video coding.

In case of heterogeneous clients, wherein the different clients e.g. have different resolutions (for example high definition (HD) television, standard definition (SD) television, and mobile television), video streams for each client need to be provided in different resolutions, and with H.264/AVC for each resolution a separate video stream needs to be multicast on the network.

H.264/SVC is a scalable extension of H.264/AVC, which allows to encode a plurality of resolutions in a single video stream. This allows a better compression than when the video images would be coded in separate video streams at different resolution.

The scalability of SVC relates to the ability to remove parts of the video stream in order to adapt it to the various needs or preferences of end users as well as to varying terminal capabilities or network conditions, resulting in a substream that forms another valid video stream for some target decoder. The substream represents the source content with a reconstruction quality that is less than that of the complete original bitstream but is high when considering the lower quantity of remaining data.

With the application of a properly configured SVC scheme, the source content has to be encoded only once, for the highest required resolution and bit rate, resulting in a scalable video stream from which representations with lower resolution and/or quality can be obtained by discarding data. For instance, a client with restricted resources (display resolution, processing power or battery power) needs to decode only a part of the delivered video stream. Similarly, in a multicast scenario, terminals with different capabilities can be served by a single scalable video stream.

The coding of video streams into H.264/SVC may be abstracted in at least two layers: the Video Coding Layer (VCL) which transforms the pixel images into a compressed binary stream of data, and the Network Abstraction Layer (NAL) which converts the binary stream of data into packets (NAL units - NALUs).

In the VCL, pictures to be encoded are partitioned into smaller coding units, called macroblocks. Each macroblock covers a predetermined picture area, for example a rectangular picture area, of a predetermined number of samples (pixels). The samples of a macroblock are either spatially or temporally predicted, and the resulting prediction residual signal is represented using transform coding. Macroblocks of a picture can be grouped in slices, which form the smallest independent picture segments of a video stream. Each slice of a picture can be coded independently from any other slice of that picture. An I-, P- or B-type can be associated with a slice, and these types form the prediction restrictions of the slice. In the following, for ease of explanation only, a single picture is not split into different slices, hence each picture consists of one slice only. This, however, is not intended to be limiting for the present invention.

An I-slice is an image which is obtained via intra-picture predictive coding, hence an image which is predicted using only spatial prediction from neighboring regions. A particular type of I-image is an IDR-slice (Instantaneous Decoder Refresh). The macroblocks in an IDR-slice are built without reference to previous slices. Moreover, slices which follow an IDR-slice in an encoded video stream may not refer to slices which have been encoded before that particular IDR-slice.

A P-slice is an image which is predicted via a combination of intra-picture predictive coding and inter-picture predictive coding. It is an image of which the macroblocks are predicted by means of a macroblock from a picture that has previously been encoded.

A B-slice is an image which is predicted via a combination of intra-picture predictive coding, inter-picture predictive coding and inter-picture bipredictive coding. A B-slice can make use of two pictures which have previously been encoded.

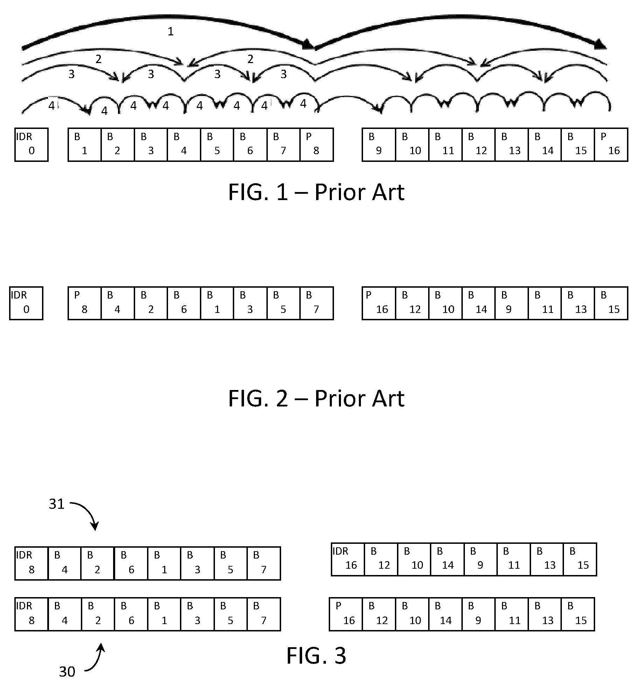

A schematic illustration of the different types of slices used in scalable coding formats, e.g. in SVC, is illustrated in FIG. 1. Each square corresponds to an image in a video stream. The first image is indicated IDR0, the second one B1 and so on. This is also called the viewing sequence: looking in a direction from left to right, the sequence of the images is as they will appear on screen.

Another way of representing the video stream is according to the decoding sequence, schematically illustrated in FIG. 2. Looking in a direction from left to right, the sequence of the images is as they will be dealt with by the codec.

The first image to be dealt with always is an IDR-image; in the case illustrated an IDR0 image. In the subsequent images, predictions will be used. The first image to be encoded is P8. IDR0 is used as reference image for P8. When encoding P8, the encoder looks in IDR0 for macroblocks which look like the macroblocks in P8 and indicates these with a movement vector. The images between IDR0 and P8 can now be predicted by means of biprediction. B4 is in the middle between IDR0 and P8 and is the next image that will be encoded, based on IDR0 and P8. The encoding (and later decoding) sequence of the images can be seen in FIG. 2. The next image to be encoded is B2, based on IDR0 and B4, etc.

The structure of FIG. 1 from B1 to P8 and from B9 to P16 is called a group of pictures (GOP). In viewing direction, a GOP starts with a number of B-slices and ends with a P-, I- or IDR-slice. In decoding sequence as in FIG. 2, a GOP comprises a P-, I- or IDR-slice and the subsequent B-slices. The first IDR image of a video stream is an exception: the first GOP only consists of IDR0.

If more IDR-slices are required in the video stream, then e.g. P8 and P16 can be encoded as I-slices rather than as P-slices. This may be obtained by selecting an IDR-period. Such IDR-period determines every how many images an IDR-image should be present. If, in the example illustrated, P8 and P16 are IDR-images, then the IDR-period equals 8: every eighth image is an IDR-image, and no P-slices are present in the video stream. At an IDR-period of 16 and a GOP-size of 8, every eighth image is alternatingly an IDR-image and a P-slice.

After the prediction of the image content, this image content is transformed and quantized. The level of quantization is determined by a quantization parameter (QP), which can take one of a plurality of values, e.g. one out of 52 values. A high quantization parameter relates to a low quality and vice versa. The resulting data is then losslessly compressed by a suitable coding algorithm and is thereafter packed with suitable syntax elements into a NALU.

According to embodiments of the present invention, the principles behind SVC are used for switching channels in digital television environments, like e.g. IPTV. It is an advantage of embodiments of the present invention that a fast zapping speed between video streams can be obtained while bandwidth requirements are still acceptable.

In accordance with embodiments of the present invention, a video stream is coded in a scalable coding format, comprising a base layer and at least one enhancement layer. At least one of the at least one enhancement layers in accordance with embodiments of the present invention is a fast switching enhancement layer used for switching channels. Hereto, in accordance with embodiments of the present invention, this enhancement layer is adapted so as to comprise channel switching information. The enhancement layer comprises more random access points than the base layer.

On the one hand, a short period between IDR-images in a video stream allows to fastly switch between different video streams. On the other hand, a long IDR-period provides an acceptable bandwidth. In accordance with embodiments of the present invention, both properties may be combined by using different layers. These layers have a same GOP structure but may have different IDR periods.

A coding structure according to embodiments of the present invention is illustrated in FIG. 3. In the basic layer 30, the video stream is coded with a large IDR-period, thus saving on bandwidth. On top of the basic layer 30, an enhancement layer 31 for switching is provided, in which the video stream is coded with a smaller IDR-period, allowing a decoder to start decoding earlier. In the example illustrated, the enhancement layer 31 has an IDR-period which is half the IDR-period of the basic layer 30. Hence it takes a shorter time, e.g. half as long, before the decoder can start decoding the enhancement layer 31. The basic layer 30 provides a reduced bandwidth in view of the limited number of IDR-frames being present, and the enhancement layer 31 provides a fast switching capability in view of the increased number of IDR-frames being present. In order not to burn bandwidth, in accordance with embodiments of the present invention the video stream may be coded in the enhancement layer at lower quality.

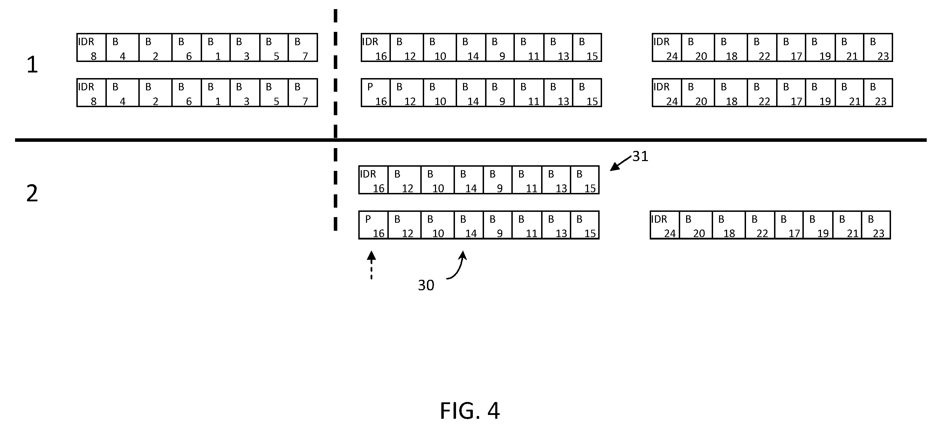

In use, the video stream looked at before the switching, also called the source video, can be interrupted at any time. The coded images, already received by the decoder but not displayed yet, are stored in a buffer but can easily be removed. In the video stream towards which is to be switched, also called the target video, the codec looks for an IDR-image. This process is illustrated schematically in FIG. 4. The video stream illustrated at the top of FIG. 4 is the one of the target video, where the vertical line illustrates the moment of channel switching. The decoder only knows that a switch has to take place as from the vertical line. Hence images from the new video stream can be used as from IDR16, as illustrated in the bottom part of FIG. 4. Even if the decision to switch would be taken earlier, as long as it takes place after IDR8, the decoder has to wait until reception of IDR16 before decoding of the target video stream can actually begin.

The decoder can only start decoding the full quality image if an IDR-frame is present in the base layer 30. That is why, in conventional systems, switching is often slow. In the example illustrated in the bottom of FIG. 4, the decoder will start decoding the IDR-frame of the enhancement layer 31, as the corresponding GOP of the base layer 30 starts with a P-frame, which contains references to IDR8. As this is a reference to IDR8 of the target video stream, which has not been received before, P16 cannot be decoded. Hence in accordance with embodiments of the present invention, after switching the enhancement layer 31 for switching is decoded until an IDR frame is found in the base layer. In the embodiment illustrated this happens at IDR24, hence as from this frame the full video stream can be decoded from the base layer 30.

After the transition from the source video to the target video, e.g. as soon as the first IDR of the base layer 30 of the target video is received and can be decoded, the enhancement layer 31 for switching can be discarded, and only the base layer 30 with high compression rate (and optionally other enhancement layers depending on the requirements of the system) needs to be transmitted, up to the next request for channel switching. This removal of the enhancement layer 31 for switching (hence less efficient data) from the transmitted data provides a bandwidth gain.

In the embodiment illustrated, the enhancement layer 31 for switching will only be decoded during the first eight frames after the channel switching. Typical timing for showing these 8 frames is about 320 ms. This means that the user will be shown the frames of the enhancement layer 31 for switching during only about 320 ms. As this is a really short period, the quality of the video coded in this enhancement layer 31 for switching may be very low, much lower than the quality of the video stream coded in the base layer 30. Hence by decoding the enhancement layer 31 for switching, low quality images are provided, but switching can be fast.

It has to be noted that the placement of the IDR-frame on top of the P-frame in image 16 is possible by an single-loop feature of the decoder. P16 comprises P- and I- macroblocks. Only the information of the I-macroblocks can be handed over to the IDR16-frame. The other information is not used for prediction in the enhancement layer 31.

Also to understand the decoding of full image 12, the single-loop feature of the decoder has to be taken into account. The B12-frame from the base layer 30 is predicted from movement vectors to P16 and IDR8. In the enhancement layer 31 for switching, the IDR8-frame is not present, hence references to IDR8 cannot be used. Hence in B12 no reference to IDR8 from the base layer is used, and the information which is lost by doing so is caught by this frame B12 in the enhancement layer 31.

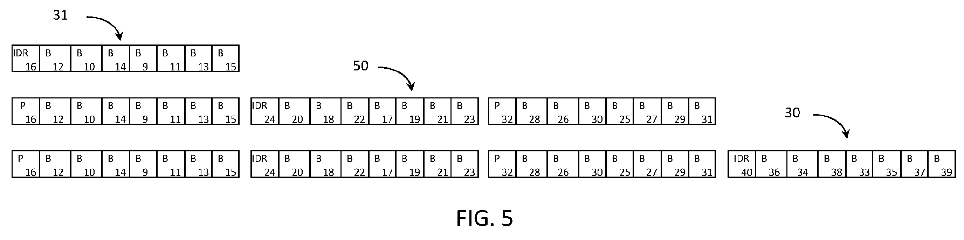

The above principles can be easily extended to a coding scheme comprising a basic layer 30, an enhancement layer 31 for switching and a plurality of other enhancement layers, such as for example enhancement layers encoding the video stream at different resolutions for heterogeneous client systems. If the basic layer 30 has an IDR-period of 32, the first enhancement layer has an IDR-period of 16 and the second enhancement layer 31 has an IDR-period of 8, then the decoder has to wait maximum 31 frames or 1.24s before the original video stream can be decoded. This structure is illustrated schematically in FIG. 5. Due to the layer structure, the user already sees an image after maximum 7 frames or 280 ms. This is the image reconstructed from slices in the enhancement layer 31 for switching. This layer has the largest number of IDR-frames, hence there an IDR-frame may be encountered first. After showing 8 images of lowest quality, 16 images of higher quality may be shown, reconstructed from slices in the enhancement layer 50. Finally the full quality images can be shown, reconstructed from slices in the base layer 30. As soon as the IDR-frame from the base layer is received, the enhancement layer 31 for switching does not need to be transmitted anymore. In alternative embodiments, transmission of the enhancement layer 31 for switching may even be stopped as soon as an IDR-frame of the intermediate quality enhancement layer 50 is received.

The structure explained in detail above is not the only structure which can be used. The IDR-period of the enhancement layer 31 for switching was set to be 8, and the IDR-period of the base layer 30 was set to be 16. This, however, in not intended to be limiting for the present invention. Numerous other combinations are possible in accordance with embodiments of the present invention, as long as the IDR-period of the enhancement layer 31 for switching is smaller than the IDR-period of the base layer 30, and smaller than the IDR-periods of any of the optional other enhancement layers 50.

Furthermore, in accordance with embodiments of the present invention, the structure can be changed. The GOP-size can be varied. As an example, the GOP-size can be made smaller. This leads to the presence of more P-frames between the IDR-frames. This does not have any negative consequences for the method according to embodiments of the present invention. The compression of the video stream will change in positive or negative direction, depending on the image content. Alternatively, the GOP-size can also increase, taking into account that the IDR-period of the enhancement layer 31 for switching cannot be smaller than the GOP-size. If the GOP-size is set to 16, then the IDR-period of the enhancement layer 31 for switching cannot be smaller than 16. This means that the switching time between video streams in this case is set to a maximum of 15 images, or thus about 600 ms.

Also the IDR-periods can be changed. If it is for example sufficient to have a maximal delay of 600 ms for switching, then the IDR-period of the enhancement layer 31 for switching can be set to 16. The GOP-size can still be 8, leading to the fact that a P-frame will appear in the enhancement layer 31 for switching between two IDR-frames. A full reconstruction of the video stream with two layers will then only occur after maximum 31 images or 1.24 s. The supplementary delay thus introduced needs to be taken into account because the quality of the layers may have to be adapted. In order for a user not to actually notice the transition between layers, e.g. from the enhancement layer 31 for switching to the base layer 30, the quality of the enhancement layers needs to be higher if the IDR-period is taken higher.

Furthermore, in embodiments of the present invention, the number of layers can be increased. One enhancement layer 31 can be used for channel switching, and a plurality of other enhancement layers can be placed between the base layer 30 and the enhancement layer 31 for switching to meet different requirements. In accordance with embodiments of the present invention, the enhancement layer 31 for switching always has an IDR-period not larger than, and preferably smaller than the base layer 30 and any of the other enhancement layers 50. As an example, if three layers are used, then the enhancement layer 31 for switching can be set to high definition (HD) with low quality. This enhancement layer 31 for switching would only be used for fast switching between video streams. A first enhancement layer 50, the middle layer, could deliver full quality HD video. The base layer 30 could provide a full resolution coding so as to provide standard definition (SD) decoding.

In accordance with embodiments of the present invention, temporal scalability can be applied to the different layers. The enhancement layer 31 for switching can for example be visualized at half the frame rate. This results in only 4 images being shown during the first 320 ms of switching between video streams. This may have another gain on bandwidth.

The quality of the base layer 30 cannot be changed in principle, as this quality determines the quality of the image visualized after transition effects have disappeared. The quality of the base layer 30 determines the full quality which can be offered. Reducing the quality of the base layer 30 would alter the user's experience. Hence the value for the quality of the base layer cannot be used to save bandwidth. The quality of the enhancement layer 31 for switching, however, can be varied so as to obtain an optimal compression, as this quality is only visible during a short transition period after channel switching.

A fast channel switching video stream according to embodiments of the present invention may be created in a Video Head End (VHE). This can for example be a Super Head End Office (SHEO) - a program origination point for satellite-based IPTV distribution, which aggregates live national content, processes it, encodes the content and distributes it through an IP core network to VHOs; a Video Hub Office (VHO) - where regional and local content as well as on-demand services get integrated and aggregated with the national content; the typical VHO serves a metropolitan area of between 100000 to 500000 homes; or a Video Serving Office (VSO) - which maps IPTV streams to the access network for distribution to the users' homes. Hence the fast channel switching video stream according to embodiments of the present invention may be created at any location where video is received in a non appropriate format and where it is not converted until it reaches the end user. It does not matter where the video is converted into a fast channel switching scalable coding format according to embodiments of the present invention, as long as it is converted before it reaches the last mile 208 to the end-user (e.g. in the end-user residence 209).

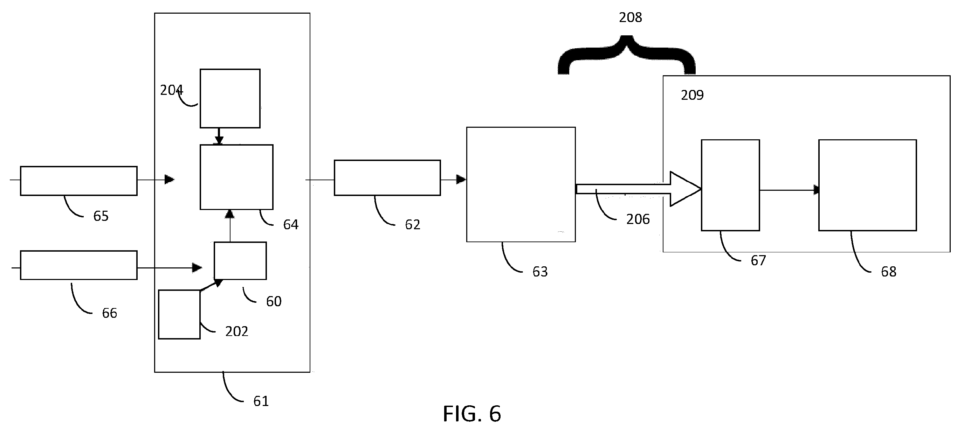

An example is illustrated in FIG. 6. In this example, the fast channel switching scalable format coded video stream may be encoded in the live encoder 60 of the Video Serving Office (VSO) 61, e.g. , received from a live source 202,. The fast channel switching scalable format coded video stream 62 can then be sent to the DSL Access Multiplexer (DSLAM) 63 that converts network signal or protocol to DSL signal or protocol, or it can be stored in the Video on Demand (VoD) server 64 in the VSO 61.

Alternatively, the fast channel switching scalable format coded video stream according to embodiments of the present invention can already be created at an earlier stage (in SHE or VHO) and may now be received by the VSO 61. This is indicated by reference number 65, also in FIG. 6, whereby an SVC video from the internal network is provided as input. The VSO 61 then only has to forward the video stream 65 according to embodiments of the present invention to the user.

The video may come from a VoD database 204

Yet alternatively, but also illustrated in FIG. 6, the VSO 61 may receive an inappropriate video stream 66, i.e. a video stream not coded in accordance with embodiments of the present invention, resulting in fast channel switching scalable format encoding in accordance with embodiments of the present invention being carried out in the VSO 61, the codes video signal 62 then again being sent to the DSLAM 63 or being stored in the VoD server 64. The video stream may be a H.264/AVC video from an internal network.

As to the encoding according to embodiments of the present invention, different possibilities are set out here as an example only. In a first possibility, a non H.264/AVC compatible format is received. In that case, full recording of the original format to a fast channel switching scalable format according to embodiments of the present invention is needed in the SVC encoder 60. In a second possibility, an H.264/AVC or an SVC or another scalable coded format video stream is received. In that case, addition of the enhancement layer for switching according to embodiments of the present invention is possible without recoding the existing video stream. This is useful for example when the existing H.264/AVC infrastructure is extended. The existing VoD video repository can be transformed to a fast channel switching scalable coding format repository according to embodiments of the present invention without quality loss and with greater efficiency than when it would be recoded. Furthermore, distribution encoders for H.264/AVC can be kept and only a fast channel switching scalable coding format enhancement layer encoder can be added.

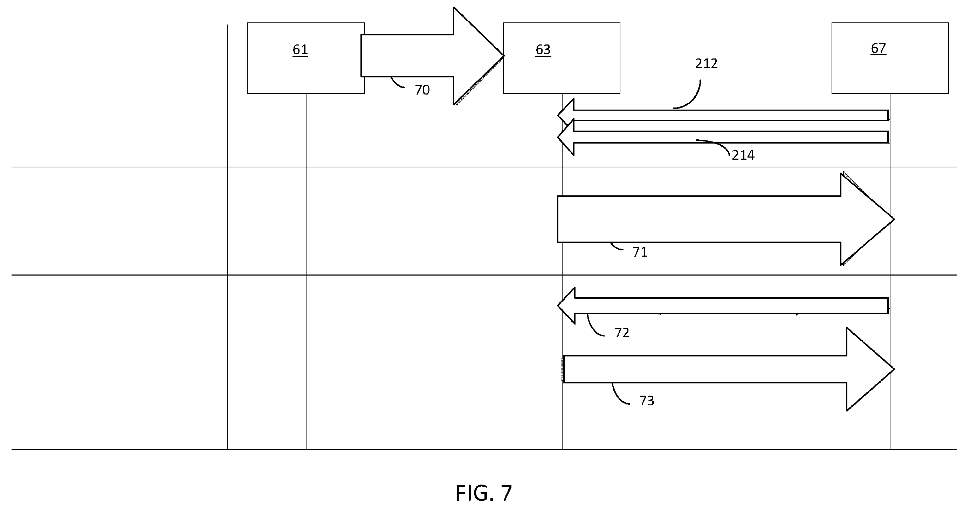

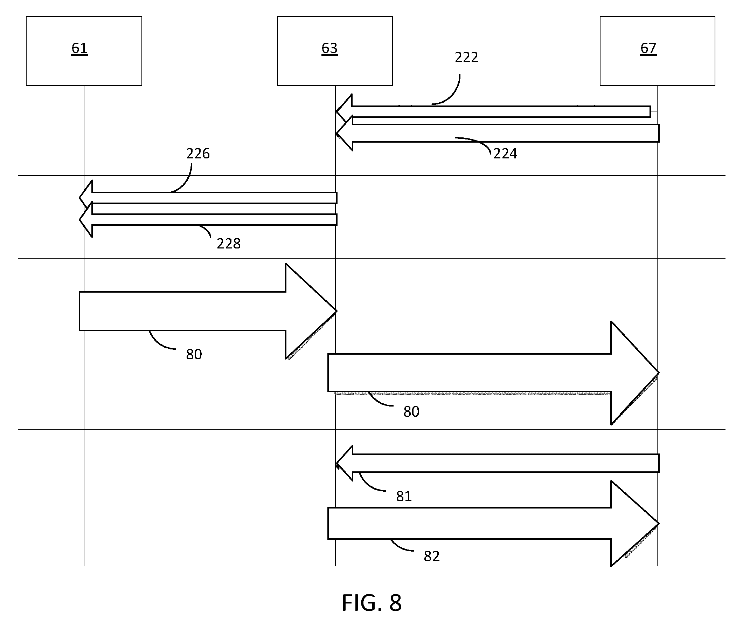

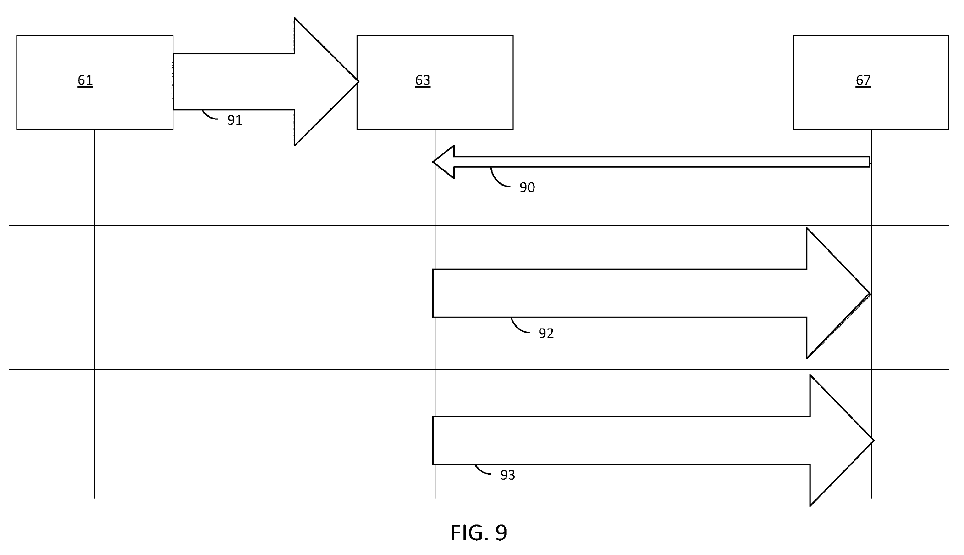

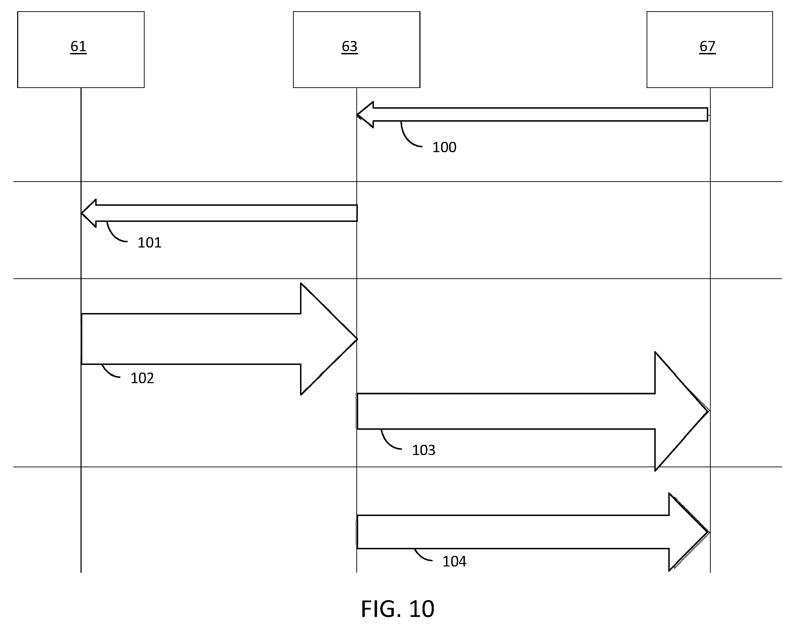

Between the access multiplexer (e.g. DSLAM) 63 and the residential gateway (RG) 67, e.g. set-top-box, an adapted SVC stream 206 is transmitted. The adaptation in the SVC stream comprises removal of the fast switching enhancement layer from the transmitted signal as soon as it is not required anymore. According to a first embodiment, each layer of the multilayer scalable video coded information may be provided in a separate multicast. In first instance, upon switching the RG requests different layers of the multilayer, including at least a base layer and at least one enhancement layer. After a transition period, only one of the layers needs to be received. According to a second embodiment, the multiplexer may itself comprise logic to determine presence of an IDR frame. In this case the multiplexer may remove the fast switching enhancement layer from the transmitted signal as from the moment when the fast switching enhancement layer is not required anymore (i.e. as from when an IDR frame is present in the base layer).
Scenario 1: scenario according to an embodiment of the present invention with slightly more intelligent Residential Gateway (RG - can be Set Top Box STB), where in the initial state the DSLAM is already included in the multicast of the channel where the end-user is switching to (target channel). This can occur for example when the end-user is switching to a popular channel.
   This embodiment is illustrated in FIG. 7.
   A user initiates the channel switch, for example by means of a remote control. The RG 67 asks to the DSLAM 63 for both layers of the video (i.e. base layer 30 and enhancement layer 31) so playing can start fast. The video stream 70 (Fast channel switch SVC video stream), encoded in accordance with embodiments of the present invention with a base layer 30 and an enhancement layer 31 for switching, is delivered from the VSO to the DSLAM 63, and after the request from the RG 67 (RG asks 212 for the SVC base layer (slow zapping), and asks 214 for the SVC enhancement layer (fast zapping)) the DSLAM 63 starts sending both video layers in coded video stream 71 (Fast Channel Switch SVC video stream (both layers)). The RG 67 sees a Random Access Picture (RAP) or IDR-frame in the enhancement layer 31 of the video stream 71 and starts displaying low quality pictures, which can be seen on the television screen 68. When the RG 67 detects a RAP or IDR-frame in the base layer 30 it can start displaying high quality video on the television screen 68. The RG 67 sends a request 72 (stop SVC enhancement layer) to the DSLAM 63 to stop transmitting the enhancement layer 31 for switching, because the enhancement layer 31 is not needed anymore by the decoder, and can be stopped sending. Hence only the base layer 30 and optionally other enhancement layers not intended nor adapted for switching are transmitted to the RG 67 via coded video stream 73 (Fast Channel Switch SVC base layer video stream).
Scenario 2: scenario according to an embodiment of the present invention with slightly more intelligent Residential Gateway (RG - can be Set Top Box STB), where in the initial state the DSLAM 63 does not yet receive the multicast of the channel where the end-user is switching to (target channel). This can occur for example when the end-user is switching to a less popular channel.
   This embodiment is illustrated in FIG. 8.
   A user initiates the channel switch, for example by means of a remote control. The RG 67 asks to the DSLAM 63 for both layers of the video (i.e. it asks 222 the base layer 30 and it asks 224 the enhancement layer 31) so playing can start fast.
   As the DSLAM 63 did not receive the asked video stream in his multicast, it asks to the VSO 61 for the video comprising both layers 30 and 31 in accordance with embodiments of the present invention, i.e. it asks 226 the SVC base layer (slow zapping) and it asks 228 the SVC enhancement layer (fast zapping).
   The VSO 61 starts sending a video stream 80 encoded in accordance with embodiments of the present invention with a base layer 30 and an enhancement layer 31 for switching, to the DSLAM 63. Upon reception thereof, the DSLAM 63 starts sending the video stream 80 (Fast Channel Switch SVC video stream (both layers)) comprising both video layers 30, 31 to the RG 67.
   The RG 67 sees a Random Access Picture (RAP) or IDR-frame in the enhancement layer 31 of the video stream 71 and starts displaying low quality pictures, which can be seen on the television screen 68. When the RG 67 detects a RAP or IDR-frame in the base layer 30 it can start displaying high quality video on the television screen 68. The RG 67 sends a request 81 (Stop SVC enhancement layer) to the DSLAM 63 to stop transmitting the enhancement layer 31 for switching, because the enhancement layer 31 is not needed anymore by the decoder, and can be stopped sending. Hence only the base layer 30 and optionally other enhancement layers not intended nor adapted for switching are transmitted to the RG 67 via coded video stream 82 (Fast Channel Switch SVC base layer video stream).
Scenario 3: scenario according to an embodiment of the present invention with slightly more intelligent DSLAM and regular RG, where the DSLAM is already included in the multicast of the channel where the end-user is switching to (target channel). This can occur when the end-user is switching to a popular channel.
   This embodiment is illustrated in FIG. 9.
   A user initiates the channel switch, for example by means of a remote control. The RG 67 asks (step 90 indicating "Ask SVC video stream") to the DSLAM 63 for a multilayer coded video stream as it did in a prior art IPTV environment.
   The video stream 91 (fast channel switch SVC video stream), encoded in accordance with embodiments of the present invention with a base layer 30 and an enhancement layer 31 for switching, is delivered from the VSO 61 to the DSLAM 63, and after the request 90 from the RG 67 the DSLAM 63 starts sending both video layers in coded video stream 92 (fast channel switch SVC video stream (both layers)). When the RG 67 sees a Random Access Picture (RAP) or IDR-frame in the enhancement layer 31 of the video stream 92 it starts displaying low quality pictures, which can be seen on the television screen 68.
   When the DSLAM 63 detects a RAP or IDR-frame in the base layer 30, it stops sending the enhancement layer 31 for switching. From then on, the RG receives a normal coded video stream 93 (fast channel switch SVC base layer video stream), e.g. a H.264/AVC video stream or an SVC video stream, comprising the base layer 30 and optionally comprising other enhancement layers not intended nor adapted for switching. The full quality can be displayed.
Scenario 4: scenario according to an embodiment of the present invention with slightly more intelligent DSLAM and regular RG, where in the initial state the DSLAM 63 does not yet receive the multicast of the channel where the end-user is switching to (target channel). This can occur for example when the end-user is switching to a less popular channel.
   This embodiment is illustrated in FIG. 10.
   A user initiates the channel switch, for example by means of a remote control. The RG 67 asks (step 100 indicating "Asking SVC video stream") for the video to the DSLAM 63 as it did in a prior art IPTV environment.
   As the DSLAM 63 did not receive the asked video stream in his multicast, it asks (step 101 indicating "Asking SVC video stream") to the VSO 61 for the video.
   The VSO 61 starts sending a video stream 102 (Fast Channel Switch SVC video stream (both layers)) encoded in accordance with embodiments of the present invention with a base layer 30 and an enhancement layer 31 for switching, to the DSLAM 63. Upon reception thereof, the DSLAM 63 starts sending the video stream 103 (Fast Channel Switch SVC video stream (both layers)) comprising both video layers 30, 31 to the RG 67.
   The RG 67 sees a Random Access Picture (RAP) or IDR-frame in the enhancement layer 31 of the video stream 103 and starts displaying low quality pictures, which can be seen on the television screen 68. When the DSLAM 63 detects a RAP or IDR-frame in the base layer 30, it stops sending the enhancement layer 31 for switching. From then on, the RG receives a normal coded video stream 104 (Fast channel switch SVC base layer video stream), e.g. a H.264/AVC video stream or an SVC video stream, comprising the base layer 30 and optionally comprising other enhancement layers not intended nor adapted for switching. The full quality can be displayed.

In scenarios 1 and 2, the RG 67 detects the RAP in the base layer 30 and terminates the enhancement layer 31 transmission. It is an advantage of these embodiments that no extra intelligence is needed in the network. All existing infrastructure in the network can be reused.

In scenarios 3 and 4, the DSLAM 63 detects the RAP in the base layer 30 and terminates the enhancement layer 31 transmission. This can be implemented by the DSLAM 63 inspecting the video stream to see whether an RAP is present in the base layer 30. When this happens, the DSLAM 63 can stop transmission of the enhancement layer 31 for switching. This may be done by packet drop of the enhancement layer packets in the DSLAM 63. Alternatively, when efficient compression of the video stream is used, a GOP of the enhancement layer 31 will not be present on top of the GOPs where an IDR is present in the base layer 30. In this case, the DSLAM 63 only has to send the enhancement layer 31 together with the base layer 30 to the end-user as long as enhancement layer frames are present on top of the base layer frames. When this stream of enhancement layer frames on top of the base layer frames is interrupted, the enhancement layer frames following in the next GOP must be dropped.

It is an advantage of the embodiments of scenarios 3 and 4 that the RG 67 does not have to be changed for fast channel switching according to embodiments of the present invention, provided it is compatible with scalable coding formats.

While the invention has been illustrated and described in detail in the drawings and foregoing description, such illustration and description are to be considered illustrative or exemplary and not restrictive. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

The foregoing description details certain embodiments of the invention. It will be appreciated, however, that no matter how detailed the foregoing appears in text, the invention may be practiced in many ways. It should be noted that the use of particular terminology when describing certain features or aspects of the invention should not be taken to imply that the terminology is being re-defined herein to be restricted to include any specific characteristics of the features or aspects of the invention with which that terminology is associated.

## Claims

1. A method for switching from a first digital video channel to a second digital video channel of a digital television system, at least the second digital video channel being coded in a H.264/SVC multilayer scalable video coding format allowing to encode different resolutions in a single video stream, the H.264/SVC multilayer scalable video coding format comprising a base layer (30) and at least one enhancement layer (31), the base layer (30) comprising picture information for a video stream and the enhancement layer comprising picture information for a same video stream as the base layer (30),
**characterized in that**:
- the enhancement layer (31) comprises more random access points than the base layer (30) thus being adapted for providing fast switching when performing video channel switching;
- the enhancement layer (31) comprising lower quality picture information than the base layer (30);
- and the method comprises the step of switching to the transmitted enhancement layer (31) at a random access point at a moment in time before a random access point in the transmitted base layer (30) is encountered.

2. A method according to claim 1, furthermore comprising, after switching to the enhancement layer (31) adapted for providing fast switching, switching to the base layer (30) of the second digital video channel at a random access point thereof.

3. A method according to claim 2, including after switching to the base layer of the second digital video signal, retaining from transmission of the enhancement layer of the second digital video signal.

4. A fast channel switching codec for coding a digital video channel, the codec being adapted for coding the digital video channel in a multilayer scalable video coding format, the video coding format being a H.264/SVC multilayer scalable video coding format comprising a base layer (30) and at least one enhancement layer (31), the base layer (30) comprising picture information for a video stream and the at least one enhancement layer comprising picture information for a same video stream as the basic layer (30), wherein the enhancement layer (31) comprises more random access points than the base layer (30) thus being adapted for providing fast switching when performing the switching, and wherein the enhancement layer (31) comprises lower quality picture information than the base layer (30).

5. A digital television system comprising a codec according to claim 4.

6. A fast channel switching digital video signal, encoded in a multilayer scalable video stream, the multilayer scalable video coding format being a H.264/SVC multilayer scalable video coding format comprising a basic layer (30) and at least one enhancement layer (31, 50), wherein the at least one enhancement layers (31) comprises picture information for a same video stream as the basic layer (30), but with more random access points and with lower quality.

## Patentansprüche

1. Verfahren zum Umschalten von einem ersten digitalen Videokanal auf einen zweiten digitalen Videokanal eines Digitalfernsehsystems, wobei zumindest der zweite digitale Videokanal in einem mehrschichtigen skalierbaren H.264/SVC Videokodierformat kodiert ist, mit dem es möglich ist, verschiedene Auflösungen in einem einzigen Video-Stream zu kodieren, wobei das mehrschichtige skalierbare H.264/SVC Videokodierformat einen Basislayer (30) und zumindest einen Verbesserungslayer (31) umfasst, wobei der Basislayer (30) Bildinformation für einen Video-Stream umfasst, und der Verbesserungslayer Bildinformation für einen selben Video-Stream umfasst, wobei der Basislayer (30) **dadurch gekennzeichnet ist, dass**:
- der Verbesserungslayer (31) mehr wahlfreie Zugriffsstellen umfasst, als der Basislayer (30) und somit ausgeführt ist, um bei der Durchführung einer Videokanalumschaltung ein rasches Umschalten zu ermöglichen;
- der Verbesserungslayer (31) Bildinformation von geringerer Qualität umfasst, als der Basislayer (30);
- und das Verfahren den Schritt des Umschaltens auf den übertragenen Verbesserungslayer (31) an einer wahlfreien Zugriffsstelle zu einem Zeitpunkt umfasst, bevor man einer wahlfreien Zugriffsstelle im übertragenen Basislayer (30) begegnet.

2. Verfahren nach Anspruch 1, das darüber hinaus nach dem Umschalten auf den Verbesserungslayer (31), der zur Unterstützung eines raschen Umschaltens ausgeführt ist, das Umschalten auf den Basislayer (30) des zweiten digitalen Videokanals an einer wahlfreien Zugriffsstelle davon umfasst.

3. Verfahren nach Anspruch 2, das nach dem Umschalten auf den Basislayer des zweiten digitalen Videosignals das Zurückhalten der Übertragung des Verbesserungslayers des zweiten digitalen Videosignals enthält.

4. Codec zur raschen Kanalumschaltung zum Kodieren eines digitalen Videokanals, wobei der Codec ausgeführt ist, um den digitalen Videokanal in ein mehrschichtiges skalierbares Videokodierformat zu kodieren, wobei das Videokodierformat ein mehrschichtiges skalierbares H.264/SVC Videokodierformat ist, das einen Basislayer (30) und zumindest einen Verbesserungslayer (31) umfasst, wobei der Basislayer (30) Bildinformation für einen Video-Stream umfasst, und der zumindest eine Verbesserungslayer Bildinformation für einen selben Video-Stream umfasst, wie der Basislayer (30), wobei der Verbesserungslayer (31) mehr wahlfreie Zugriffsstellen umfasst, als der Basislayer (30) und somit ausgeführt ist, um bei der Durchführung einer Umschaltung ein rasches Umschalten zu ermöglichen, und wobei der Verbesserungslayer (31) Bildinformation von geringerer Qualität umfasst, als der Basislayer (30).

5. Digitalfernsehsystem, einen Codec nach Anspruch 4 umfassend.

6. Digitalvideosignal für eine rasche Kanalumschaltung, das in einem mehrschichtigen skalierbaren Video-Stream kodiert ist, wobei das mehrschichtige skalierbare Videokodierformat ein mehrschichtiges skalierbares H.264/SVC Videokodierformat ist, das einen Basislayer (30) und zumindest einen Verbesserungslayer (31, 50) umfasst, wobei der zumindest eine Verbesserungslayer (31) Bildinformation für einen selben Video-Stream umfasst, wie der Basislayer (30), jedoch mit mehr wahlfreien Zugangsstellen und mit einer geringeren Qualität.

## Revendications

1. Procédé pour commuter d'un premier canal vidéo numérique à un second canal vidéo numérique d'un système de télévision numérique, au moins le second canal vidéo numérique étant codé dans un format de codage vidéo à échelle variable et à couches multiples H.264/SVC permettant d'encoder différentes résolutions dans un seul flux vidéo, le format de codage vidéo à échelle variable et à couches multiples H.264/SVC comprenant une couche de base (30) et au moins une couche à enrichissement (31), la couche de base (30) comprenant des informations d'image pour un flux vidéo et la couche à enrichissement comprenant des informations d'image pour un même flux vidéo que la couche de base (30),
**caractérisé en ce que** :
- la couche à enrichissement (31) comprend plus de points d'accès aléatoire que la couche de base (30), étant ainsi adaptée pour fournir une commutation rapide lors de la réalisation de commutation de canal vidéo ;
- la couche à enrichissement (31) comprenant des informations d'image de qualité inférieure à celles de la couche de base (30) ;
- et le procédé comprend l'étape de la commutation à la couche à enrichissement transmise (31) à un point d'accès aléatoire à un moment avant qu'un point d'accès aléatoire dans la couche de base transmise (30) soit rencontré.

2. Procédé selon la revendication 1, comprenant en outre, après la commutation à la couche à enrichissement (31) adaptée pour fournir une commutation rapide, une commutation à la couche de base (30) du second canal vidéo numérique à un point d'accès aléatoire de celle-ci.

3. Procédé selon la revendication 2, incluant, après la commutation à la couche de base du second signal vidéo numérique, l'abstention de transmission de la couche à enrichissement du second signal vidéo numérique.

4. Codec de commutation de canal rapide pour coder un canal vidéo numérique, le codec étant adapté pour coder le canal vidéo numérique dans un format de codage vidéo à échelle variable et à couches multiples, le format de codage vidéo étant un format de codage vidéo à échelle variable et à couches multiples H.264/SVC comprenant une couche de base (30) et au moins une couche à enrichissement (31), la couche de base (30) comprenant des informations d'image pour un flux vidéo et l'au moins une couche à enrichissement comprenant des informations d'image pour un même flux vidéo que la couche de base (30), dans lequel la couche à enrichissement (31) comprend plus de points d'accès aléatoire que la couche de base (30) étant ainsi adaptée pour fournir une commutation rapide lors de la réalisation de la commutation, et dans lequel la couche à enrichissement (31) comprend des informations d'image de qualité inférieure à celles de la couche de base (30).

5. Système de télévision numérique comprenant un codec selon la revendication 4.

6. Signal vidéo numérique de commutation de canal rapide, encodé dans un flux vidéo à échelle variable et à couches multiples, le formation de codage vidéo à échelle variable et à couches multiples étant un format de codage vidéo à échelle variable et à couches multiples H.264/SVC comprenant une couche de base (30) et au moins une couche à enrichissement (31, 50), dans lequel l'au moins une couche à enrichissement (31) comprend des informations d'image pour un même flux vidéo que la couche de base (30), mais avec plus de points d'accès aléatoire et avec une qualité inférieure.
